# EUROPÄISCHE PATENTANMELDUNG

(11) **EP 4 677 976 A1**
(43) Veröffentlichungstag der Anmeldung: **14.01.2026**
(21) Anmeldenummer: 25187572.0
(22) Anmeldetag: 04.07.2025
(51) Int. Cl.: A01B 21/08, A01B 61/04

(54) **ELASTOMERLAGER, INSBESONDERE FÜR LANDWIRTSCHAFTLICHE GERÄTE ZUR BODENBEARBEITUNG**

(30) Priorität: 05.07.2024 DE 102024119146
(71) Anmelder: Jörn GmbH, 71336 Waiblingen (DE)
(72) Erfinder: Lippke, Oliver, 71686 Remseck (DE)
(74) Vertreter: Liebl, Thomas

(57) **Zusammenfassung**

Die Erfindung betrifft ein Elastomerlager (1), insbesondere für landwirtschaftliche Geräte zur Bodenbearbeitung, mit einem Träger (2) und mit einem mehrteiligen Spanngehäuse (3), das mehrere miteinander verbindbare Gehäuseteile (4, 5) aufweist, wobei an einem der Gehäuseteile (5) ein Funktionsarm (9), beispielsweise ein ein Bodenbearbeitungswerkzeug aufweisender und/oder ausbildender Funktionsarm (9), anordenbar ist. Die Gehäuseteile (4, 5), sind geeignet und/oder ausgebildet, den Träger (2) unter Zwischenschaltung wenigstens eines Elastomerelementes (8a bis 8d; 15a, 15b; 16a bis 16d) zwischen dem Träger (2) und den Gehäuseteilen (4, 5) zu umgreifen und den Funktionsarm (9) im endmontierten, verbundenen Zustand der Gehäuseteile (4, 5) elastisch vorgespannt am Träger (2) zu lagern. Erfindungsgemäß ist vorgesehen, dass das wenigstens eine Elastomerelement (8a bis 8d; 15a, 15b; 16a bis 16 d) mit den Gehäuseteilen (4, 5) unlösbar oder lösbar verbunden ist.

## Beschreibung

Die Erfindung betrifft ein Elastomerlager, insbesondere ein Elastomerlager für landwirtschaftliche Geräte zur Bodenbearbeitung sowie ein landwirtschaftliches Gerät zur Bodenbearbeitung mit einem derartigen Elastomerlager.

Landwirtschaftliche Geräte zur Bodenbearbeitung sind in unterschiedlichen Ausführungen bekannt, zum Beispiel als Eggen, Grubber, Pflüge, Fräsen und Striegel, um nur einige Beispiele zu nennen. Bei einer bekannten Egge als Scheibenegge (EP 1 738 629 B1; WO 2004/026018 A1) sind beispielsweise an zwei Trägern eines Tragarms in Querreihen nach unten gerichtete Eggarme als Scheibenarme angeordnet. Zur Verbindung und Kraftübertragung zwischen einem Träger und den zugeordneten Scheibeneggarmen sind Eggarmlager jeweils als Elastomerlager bzw. Elastomer-Metall-Lager vorgesehen. Konkret weist hier ein Eggarmlager als Scheibenarmlager ein zweiteiliges metallisches Spanngehäuse auf, das den Träger mit den zwei Gehäuseteilen umgreift. An einem Gehäuseteil ist der zugeordnete Scheibenarm mit der endseitig gelagerten Scheibe befestigt. Zwischen dem Träger und den umgebenden Gehäuseteilen sind hier zylindrische Elastomerelemente lose eingelegt, die mit dem Scheibenarm über des Gehäuse verspannt werden. Die Positionierung solcher loser Elastomerkörper im Spanngehäuse und deren Verspannung stellt bei der Montage eine Herausforderung dar, die vorzugsweise durch die Vielzahl der Scheibenarme und damit der Vielzahl der Spanngehäuse einen hohen Montageaufwand erfordert. Zudem können sich die einzelnen losen Elastomerkörper während des Betriebs verschieben, was zu einer Verschlechterung oder sogar dem Ausfall der Funktion führen kann. Zudem kann die bekannte Lagerausführung nur relativ geringe Axialkräfte übertragen.

Auch andere Eggentypen, wie Zinkeneggen, Kreiseleggen, Federzinkeneggen, Tellereggen, Flügeleggen, etc. oder ganz generell landwirtschaftliche Geräte zur Bodenbearbeitung sind prinzipiell meist gleich bzw. ähnlich aufgebaut mit einem von einer Zugmaschine ziehbaren Tragrahmen und wenigstens einem nach unten gerichteten Funktionsarm, an dem das entsprechende Bodenbearbeitungswerkzeug angeordnet ist, beispielsweise in Form von endseitigen Zinken, Scheiben, Tellern, etc., wobei die Funktionsarme, wie beispielsweise die vorstehend beschriebenen Eggarme, oftmals elastisch mit einem zugeordenten Tragarm, beispielsweise einem zugeordneten Träger im Falle einer Egge als landwirtschaftliches Bodenbearbeitungsgerät, verbunden sind.

Aufgabe der Erfindung ist es ein Elastomerlager, vorzugsweise für ein landwirtschaftliches Bodenbearbeitungsgerät, zu schaffen, dessen Montage einfach durchführbar ist und dessen Funktion gegenüber herkömmlichen Elastomerlagern verbessert wird. Zudem besteht eine Aufgabe der Erfindung darin, eine entsprechende Verbesserung bei einem landwirtschaftlichen Gerät für die Bodenbearbeitung zu erreichen.

Die Aufgabe wird mit den Merkmalen der unabhängigen Ansprüche gelöst. Vorteilhafte Ausgestaltungen sind Gegenstand der Unteransprüche.

Gemäß Anspruch 1 wird ein Elastomerlager, insbesondere für landwirtschaftliche Geräte zur Bodenbearbeitung, vorgeschlagen, das einen Träger aufweist. Dieser Träger ist vorzugsweise ein Träger, der geeignet und/oder ausgebildet ist, beispielsweise in Verbindung mit einem Tragrahmen oder Traggeschirr, Bestandteil eines landwirtschaftlichen Gerätes zur Bodenbearbeitung zu bilden und/oder dort angeordnet zu werden. Derartige landwirtschaftliche Geräte zur Bodenbearbeitung sind zum Beispiel Eggen, Grubber, Pflüge, Fräsen, Kreiseleggen, Scheibeneggen, Rotoreggen, Spatenmaschinen und Striegel. Grundsätzlich ist das erfindungsgemäße Elastomerlager aber nicht nur für die Verwendung und den Einsatz in Verbindung mit landwirtschaftlichen Geräten zur Bodenbearbeitung geeignet, sondern auch für jedwede andere Verwendungen und Einsätze außerhalb dieses Bereichs, insbesondere zum Beispiel in Verbindung mit Baumaschinen oder anderen allgemeinen Maschinenbauanwendungen, hier jedoch vorzugsweise dann, wenn Belastungssituationen auftreten, die mit denjenigen von landwirtschaftlichen Geräten zur Bodenbearbeitung vergleichbar sind.

Ferner ist ein mehrteiliges, vorzugsweise metallisches, Spanngehäuse vorgesehen, das mehrere, vorzugsweise zwei, miteinander verbindbare Gehäuseteile aufweist, wobei an einem der Gehäuseteile ein Funktionsarm anordenbar ist, vorzugsweise ein ein Bodenbearbeitungswerkzeug aufweisender und/oder ausbildender Funktionsarm anordenbar ist, und wobei die Gehäuseteile geeignet und/oder ausgebildet sind, den Träger unter Zwischenschaltung wenigstens eines Elastomerelementes zwischen dem Träger und den Gehäuseteilen zu umgreifen und den Funktionsarm im endmontierten, verbundenen Zustand der Gehäuseteile elastisch vorgespannt am Träger zu lagern. Erfindungsgemäß ist vorgesehen, dass das wenigstens eine Elastomerelement mit den Gehäuseteilen unlösbar oder lösbar verbunden ist.

Erfindungsgemäß sind die Elastomerelemente somit nicht lose eingelegt, sondern unverlierbar an den Gehäuseteilen angehaftet, vorzugsweise mit einer inneren Fläche der Gehäuseteile lösbar oder unlösbar verbunden. Damit wird vorteilhaft erreicht, dass die Montage, vorzugsweise die Montage einer großen Anzahl von Elastomerlagern an einem Träger eines landwirtschaftlichen Gerätes zur Bodenbearbeitung, wesentlich vereinfacht und kostengünstiger wird. Insbesondere können sich die angebundenden Elastomerelemente im Betrieb auch nicht mehr funktionsungünstig verschieben. Durch die Anbindung können auch verhältnismäßig größere Axialkräfte übertragen werden als im vorbekannten Stand der Technik. Oder es können die Bauteile und der Bauraum bei gleicher möglicher Axialkraftübertragung wie im vorbekannten Stand der Technik, gegebenenfalls vorteilhaft verkleinert werden.

Unter einem Elastomerlager im Sinne der vorliegenden Erfindung wird vornehmlich ein "Elastomer-Metall-Lager" oder "Elastomer-Metall-Lager" verstanden, wobei diese Begrifflichkeiten, wie auf dem Fachgebiet üblich, allgemein zu verstehen und breit auszulegen sind, das heißt, dass der Begriff "Metall" stellvertretend für ein stabiles und/oder verformungssteifes Lagerbauteil steht, das nicht nur durch Metall, sondern durch jedes andere geeignete Material, insbesondere auch aus einem Kunststoff gebildet sein und/oder hergestellt sein kann. Das gleiche gilt in analoger Weise für den Begriff "Gummi", der als Synonym für jedes in Verbindung mit derartigen Lagern geeignete Elastomermaterial steht.

Unter einer unlösbaren Verbindung wird dabei eine Verbindung verstanden, die nicht zerstörungsfrei gelöst werden kann, wie zum Beispiel eine stoffschlüssige Verbindung. Dementsprechend ist gemäß einer ersten bevorzugten Ausführungsform vorgesehen, dass das wenigstens eine Elastomerelement zur unlösbaren Verbindung mit den Gehäuseteilen an einer inneren Fläche der Gehäuseteile angehaftet ist, vorzugsweise anvulkanisiert ist. Eine derartige Verbindung zeichnet sich durch eine hohe Funktionssicherheit aus. Weitere Vorteile sind die hohe Festigkeit und Stabilität der Verbindung, die Widerstandsfähigkeit gegen Umwelteinflüsse wie Feuchtigkeit und Chemikalien, reduzierte Wartungskosten sowie die Tatsache, dass keine mechanische Schwächung des Materials durch Bohrungen oder andere Eingriffe erfolgt.

Alternativ dazu kann die Verbindung aber auch als lösbare Verbindung ausgebildet sein. Dementsprechend wird gemäß einer alternativen Ausführungsform vorgeschlagen, dass das wenigstens eine Elastomerelement zur lösbaren Verbindung mit den Gehäuseteilen mittels einer Formschlussverbindung lösbar an einer inneren Fläche der Gehäuseteile angebunden ist, vorzugsweise mittels wenigstens eines Einknüpfelementes des wenigstens einen Elastomerelementes an wenigstens einem Einknüpfgegenelement einer inneren Fläche der Gehäuseteile lösbar und formschlüssig eingeknüpft ist. Eine solche lösbare Verbindung bietet Vorteile wie einfache Wartung und Austauschbarkeit, Flexibilität in der Anwendung, reduzierte Stillstandszeiten und Wiederverwendbarkeit der Verbindungselemente. Zudem lässt sich hier gegebenenfalls auch der Montageaufwand reduzieren.

Grundsätzlich ist es vorteilhaft, wenn an einem Elastomerlager die Gehäuseteile mit den jeweiligen Elastomerelementen auf die gleiche Art und Weise verbunden sind, also die Elastomerelemente beider Gehäuseteile entweder lösbar oder unlösbar mit den Gehäuseteilen verbunden sind. Grundsätzlich sind jedoch auch Mischformen jeglicher Art möglich, bei denen beispielsweise die Elastomerelemente eines ersten Gehäuseteils mittels einer unlösbaren Verbindung und die Elastomerelemente eines zweiten Gehäuseteils mittels einer lösbaren Verbindung verbunden sind.

In einer konkreten, einfach herstellbaren Ausführungsform ist der Träger ein Vierkantelement, vorzugsweise ein Vierkantrohr, dessen Vierkantelement-Seiten eine vorbestimmten Kantenlänge aufweisen, wobei das Spanngehäuse zweigeteilt ist und zwei Gehäuseteile aufweist, die im zusammengespannten Zustand ein Vierkant-Aufnahmeauge ausbilden, dessen Aufnahmeauge-Seiten eine vorbestimmte Kantenlänge aufweisen, vorzugsweise mit einer im Vergleich zu den Vierkantelement-Seiten größeren Kantenlänge.

Für eine einfache und funktionssichere Verbindung bzw. ein einfaches und funktionssicheres Zusammenspannen der Gehäuseteile des Spanngehäuses ist eine Ausführungsform vorteilhaft, bei der die Gehäuseteilung des Spanngehäuses an zwei gegenüberliegenden Vierkantecken liegt, wobei an jedem der Gehäuseteile der gegenüberliegenden Vierkantecken Spannflansche angeordnet und einander zugeordnet sind.

Gemäß einer besonders bevorzugten konkreten Ausführungsform, mit der sich nicht nur ein vorteilhafter und funktionssicherer Aufbau realisieren lässt, sondern der sich zudem auch noch durch eine besonders einfache Herstellbarkeit auszeichnet, ist vorgesehen, dass zwischen einander zugeordneten Vierkantelement-Außenflächen und Gehäuseteil-Innenflächen wenigstens ein Elastomerelement angeordnet ist, wobei in den Elastomerelementen im endmontierten Zustand bei zusammengespanntem Spanngehäuse, das heißt bei verbundenen Gehäuseteilen, eine Vorspannung aufgebracht ist.

In Verbindung mit einer derartigen Ausführungsform können zudem auf einfache Weise unterschiedliche konkrete Ausführungsformen realisiert werden. So kann beispielsweise bei parallel zueinander ausgerichteten und einander zugewandten Vierkantelement-Außenflächen und Gehäuseteil-Innenflächen jeweils wenigstens ein Elastomerelement zwischen den einander zugewandten parallelen Vierkantelement-Außenflächen und Gehäuseteil-Innenflächen angeordnet sein. Alternativ können bei einer, gegenüber einer parallelen Ausrichtung der Vierkantelement-Außenflächen und Gehäuseteil-Innenflächen, verdrehten Vierkantelementanordnung jeweils mehrere Elastomerelemente zwischen mehreren Vierkantelement-Außenflächen und der Gehäuseteil-Innenfläche eines Gehäuseteils angeordnet sein. Das erhöht die konstruktive Flexibilität bei der Herstellung eines Elastomerlagers.

In einer bevorzugten konkreten Ausführungsform sind wenigstens zwei, vorzugsweise voneinander beabstandete, Elastomerelemente direkt an jeder Gehäuseteil-Innenfläche der beiden Gehäuseteile lösbar oder unlösbar angebunden, zum Beispiel anvulkanisiert oder eingeknüpft. Damit wird eine präzise Positionierung für eine gleichmäßige Lastverteilung gewährleistet, was die Lebensdauer des Lagers insgesamt erhöht. In einer diesbezüglichen Weiterbildung ist bevorzugt vorgesehen, dass eines der einander randseitig an den beiden Gehäuseteilen benachbart gegenüberliegenden Elastomerelementpaare mittels eines Elastomersteges verbunden ist. Dadurch wird erreicht, dass die beiden Gehäuseteile zusammenhängend zur Montage am Träger aufklappbar sind.

Gemäß einer weiteren optionalen Ausgestaltung kann vorgesehen sein, dass in wenigstens einem der beiden Gehäuseteile ein Zwischenblech, das Bestandteil des Spanngehäuses bildet, angeordnet ist, vorzugsweise eingelegt ist. Das Zwischenblech liegt im endmontierten Zustand an der zugeordneten Gehäuseteil-Innenfläche, vorzugsweise form- und/oder konturangepasst, an, wobei die Elastomerelemente mit dem Zwischenblech lösbar oder unlösbar verbunden sind, vorzugsweise mit einer dem Vierkantelement zugewandten Zwischenblech-Innenfläche lösbar oder unlösbar verbunden sind. Bei dieser Ausführungsform sind die Elastomerelemente somit nicht unmittelbar an den Gehäuseteil-Innenflächen angebunden, sondern an Bestandteil der Gehäuseteile und damit des Spanngehäuses bildenden Zwischenblechen, vorzugsweise Zwischenblech-Innenflächen, was Vorteile bei der Endmontage haben kann. Grundsätzlich kann somit nur ein einziges Zwischenblech oder können zwei Zwischenbleche verwendet werden. Auch hier kann dann vorteilhaft eines der einander randseitig an den beiden Zwischenblechen benachbart gegenüberliegenden Elastomerelementpaare mittels eines Elastomersteges miteinander verbunden sein. Auch damit wird erreicht, dass der Aufbau zusammenhängend zur Montage am Träger aufklappbar ist.

In einer weiteren optionalen Ausgestaltung können Zwischenbleche zumindest bereichsweise mit einem axialen Randbereich in Richtung auf die Elastomerelemente zu und diese axial abstützend zu wenigstens einem Steg umgebogen, beispielsweise umgebördelt, sein. Dadurch kann die axiale Lagersteifigkeit erhöht werden, gegebenenfalls mit einer Verkleinerung des bisher üblicherweise benötigten Bauraums. Alternativ oder zusätzlich dazu kann das wenigstens eine Zwischenblech zumindest bereichsweise mit einem axialen Randbereich in Richtung auf die Gehäuseteile zu und diese axial abstützend zu wenigstens einem Steg umgebogen, vorzugsweise umgebördelt, sein. Damit lässt sich eine einfache Axialsicherung im Gehäuse realisieren.

Gemäß einer weiteren optionalen Ausführungsform eines Elastomerlagers sind und/oder liegen die Vierkantelement-Außenflächen und die Gehäuseteil-Innenflächen so verdreht, vorzugsweise um 90° verdreht, dass im montierten Zustand das zweiteilige Spanngehäuse und das Vierkantelement jeweils zwei gegenüberliegende Dreieckräume ausbilden, in denen an den Gehäuseteilen Elastomerelemente lösbar oder unlösbar angebunden sind, die die Dreieckräume im endmontierten Zustand wenigstens teilweise ausfüllen, wobei bevorzugt vorgesehen ist, dass im Bereich der Spannflansche an den Innenseiten der Gehäuseteile jeweils ein in Richtung auf eine gegenüberliegende Vierkantelement-Außenfläche hin gerichtetes Elastomerelement lösbar oder unlösbar angebunden sind. Auch mit einer derartigen Ausführungsform kann eine gute axiale und radiale Steifigkeit erreicht werden.

Die obige Aufgabe wir weiter auch durch ein Landwirtschaftliches Gerät, beispielsweise eine Egge, zur Bodenbearbeitung gelöst, die einen Träger aufweist, an dem wenigstens ein Funktionsarm, vorzugsweise wenigstens ein ein Bodenbearbeitungswerkzeug aufweisender und/oder ausbildender Funktionsarm, mittels eines Elastomerlagers, vorzugsweise mittels eines Elastomerlagers wie es vorstehend ausführlich beschrieben worden, gelagert ist, wobei bevorzugt vorgesehen ist, dass eine Mehrzahl von in Querrichtung beabstandeten und/oder versetzten Funktionsarmen mittels jeweils eines Elastomerlagers gelagert sind. Das wenigstens eine Elastomerlager weist ein mehrteiliges, vorzugsweise metallisches, Spanngehäuse auf, das mehrere, vorzugsweise zwei, miteinander verbindbare Gehäuseteile aufweist, wobei der Funktionsarm an einem der Gehäuseteile befestigt ist und wobei die Gehäuseteile geeignet und/oder ausgebildet sind, den Träger im endmontierten Zustand zu umgreifen, wobei zwischen dem Träger und den umgreifenden Gehäuseteilen wenigstens ein Elastomerelement angeordnet ist, das im endmontierten Zustand bei miteinander verbundenen Gehäuseteilen elastisch vorgespannt ist. Erfindungsgemäß ist vorgesehen, dass das wenigstens eine Elastomerelement mit den Gehäuseteilen lösbar oder unlösbar verbunden ist.

Die sich hierdurch ergebenden Vorteile sind identisch zu den vorstehend genannten Vorteilen des Elastomerlagers, so dass zur Vermeidung von Wiederholungen auf die zuvor gemachten diesbezüglichen Ausführungen verwiesen wird.

Bevorzugt ist zudem eine Ausführungsform, bei der das Elastomerlager als Scheibenarmlager einer Scheibenegge eingesetzt ist, bei der an wenigstens zwei hintereinander liegenden Trägern eines Tragrahmens, der geeignet und/oder ausgebildet ist, mittels einer Zugmaschine über eine Bearbeitungsfläche gezogen zu werden, in Querreihen drehbar gelagerte Scheiben endseitig an Scheibenarmen angeordnet sind.

Anhand einer Zeichnung wird die Erfindung lediglich beispielhaft in Verbindung mit einem als Scheibenegge ausgebildeten landwirtschaftlichen Gerät zur Bodenbearbeitung näher erläutert. Es zeigen:
- Figur 1: eine perspektivische Ansicht eines als Elastomerlager ausgebildeten Scheibenarmlagers einer Scheibenegge,
- Figur 2: eine zweite Ausführungsform eines Scheibenarmlagers mit einem Zwischenblech,
- Figur 3a: ein Vulkanisierteil mit zwei Zwischenblechen,
- Figur 3b: eine alternative Ausführungsform des Vulkanisierteil der Figur 3a,
- Figur 4a: eine stirnseitige Ansicht eines Scheibenarmlagers mit einem eingebauten Vulkanisierteil nach Figur 3a,
- Figur 4b: eine stirnseitige Ansicht eines Scheibenarmlagers mit einem eingebauten Vulkanisierteil nach Figur 3b,
- Figur 4c: eine perspektivische Ansicht des Scheibenarmlagers gemäß Figur 4b,
- Figur 5: eine perspektivische Ansicht einer dritten Ausführungsform eines Scheibenarmlagers,
- Figur 6: eine stirnseitige Ansicht des Scheibenarmlagers nach Figur 5, und
- Figur 7: ein Scheibenarmlager mit angeschlossenem Scheibenarm und einer endseitigen Scheibe nach dem Stand der Technik.

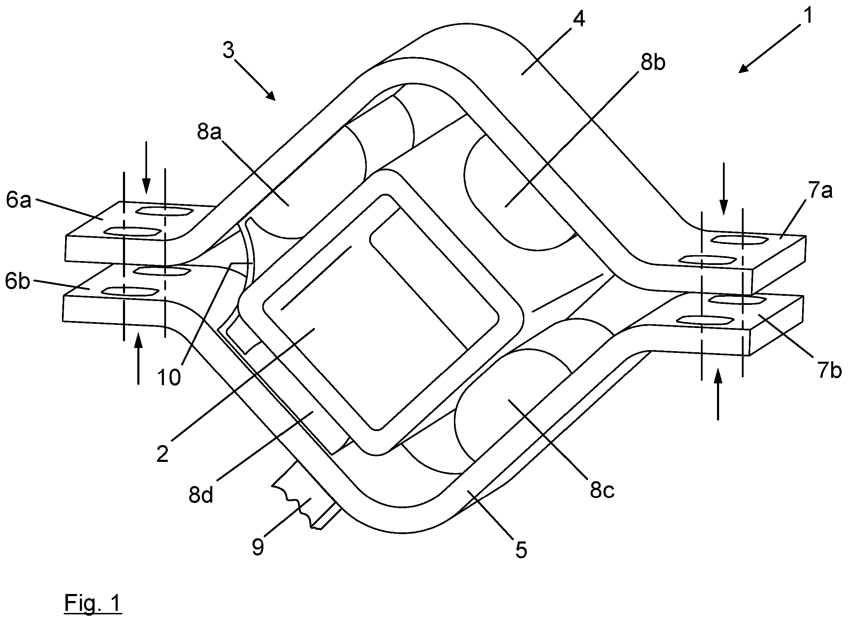

In Figur 1 ist ein Elastomerlager als Scheibenarmlager 1 einer (nicht dargestellten) Scheibenegge dargestellt. An sich bekannte übliche Scheibeneggen bestehen aus einem mittels einer Zugmaschine über eine Bearbeitungsfläche ziehbaren Tragrahmen mit wenigstens einem, in der Regel zwei hintereinander liegenden Trägern (auch als Eggen-Querträger bezeichnet), von denen eine Vielzahl von Scheibenarmen mit daran endseitig drehbar gelagerten Scheiben schräg nach unten abragen. Die Scheibenarme sind am jeweiligen Träger mittels Scheibenarmlagern 1 elastisch gelagert.

Das erfindungsgemäße Scheibenarmlager 1 einer ersten Ausführungsform nach Figur 1 ist an einem hier lediglich beispielhaft als Vierkantelement in Form eines Vierkantrohres 2 ausgebildeten Träger montiert und weist ein zweigeteiltes Spanngehäuse 3 mit zwei Gehäuseteilen 4, 5 auf.

Die Gehäuseteile 4, 5 sind im hier gezeigten Beispielfall Winkelteile, die im verbundenen, zusammengespannten Zustand ein Vierkant-Aufnahmeauge ausbilden, dessen Kantenlänge im Vergleich zur Kantenlänge des Vierkantrohres 2 größer ist, so dass zwischen Vierkantrohr 2 und Spanngehäuse 3 Spalten bzw. Freiräume gebildet sind.

Die Gehäuseteilung liegt an zwei gegenüberliegenden Vierkantecken, wobei an jedem der Gehäuseteile 4, 5 der gegenüberliegenden Vierkantecken Spannflansche 6a, 6b bzw. 7a, 7b angeordnet und einander zugeordnet sind.

In den Spalten bzw. Freiräumen zwischen dem Vierkantrohr 2 und dem Spanngehäuse 3 sind hier beispielhaft vier Elastomerelemente 8a, 8b, 8c, 8d zwischen jeweils parallel zueinander ausgerichteten Vierkantrohr-Außenflächen und Gehäuseteil-Innenflächen angeordnet, die im hier gezeigten Beispielfall an den zugeordneten Gehäuseteil-Innenflächen angehaftet, vorzugsweise anvulkanisiert sind. Alternativ dazu könnten die Elastomerelement 8a bis 8d aber auch mittels einer Formschlussverbindung lösbar an einer inneren Fläche der Gehäuseteile 4, 5 angebunden sein, beispielsweise mittels wenigstens eines elastomerelementseitig ausgebildeten Einknüpfelementes an einem Einknüpfgegenelement einer inneren Fläche der Gehäuseteile 4, 5 lösbar und formschlüssig eingeknüpft sein, was hier aber nicht dargestellt ist. Diese alternative lösbare Verbindungsmöglichkeit gilt für sämtliche in der weiteren Figurenbeschreibung näher erläuterten Ausführungsbeispiele, in denen von einem Anhaften oder Anvulkanisieren die Rede ist, auch wenn dies nicht jedes Mal explizit erwähnt ist.

Die Größe und das Volumen der Elastomerelemente 8a bis 8d sind so dimensioniert, dass in ihnen bei zusammengespanntem Spanngehäuse 3 eine Vorspannung aufgebracht ist.

Die Gehäuseteile 4, 5 sind beispielhaft formstabile Metallteile oder Kunststoffteile, wobei von dem unteren Gehäuseteil 5 ein (nur schematisch gezeigter) Scheibenarm 9 als Funktionsarm nach unten abragt, der mit dem Gehäuseteil 5 fest und vorzugsweise unlösbar verbunden ist, vorzugsweise dort angeschweißt ist.

Zudem ist in Figur 1 strichliert ein optionaler Elastomersteg 10 zwischen den freien Randbereichen der Elastomerelemente 8a und 8b eingezeichnet, durch den die beiden Gehäuseteile 4 und 5 aufklappbar zusammenhängen und als Montageerleichterung aufgeklappt zusammenhängend über das Vierkantrohr 2 gesteckt werden können.

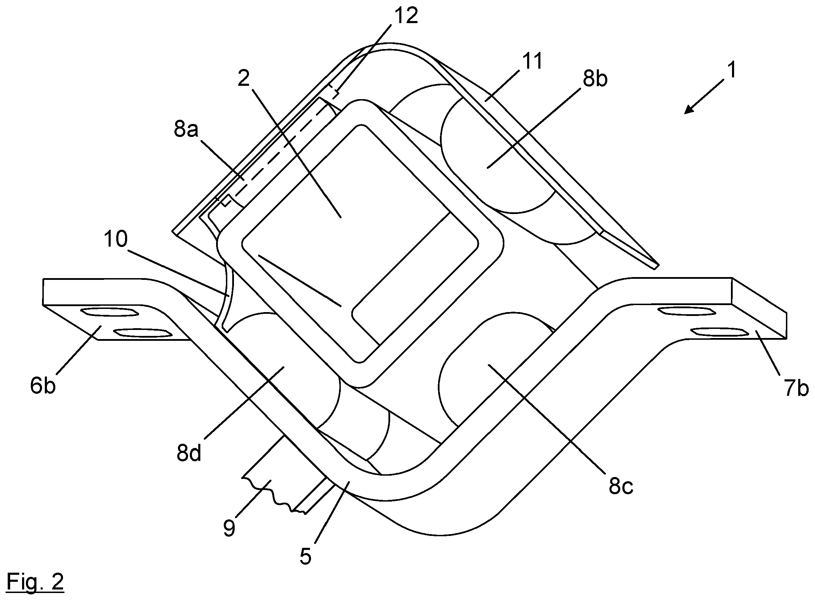

Figur 2 zeigt eine zweite Ausführungsform eines Scheibenarmlagers 1 mit einem ähnlichem Aufbau wie das Scheibenarmlager 1 nach Figur 1, wobei gleiche Teile mit gleichen Bezugszeichen versehen sind.

Im Scheibenarmlager 1 nach Figur 2 entspricht das untere Gehäuseteil 5 mit den angehafteten, insbesondere anvulkanisierten, Elastomerelementen 8c und 8d sowie das Vierkantrohr 2 der ersten Ausführungsform nach Figur 1. Anstelle des oberen Gehäuseteils 4 von Figur 1 ist hier ein Zwischenblech 11 als Blechwinkel und Bestandteil des Spanngehäuses 3 verwendet, an dessen Innenseiten die Elastomerelemente 8a und 8b angehaftet, insbesondere anvulkanisiert sind.

Auch hier sind die Elastomerelemente 8a und 8d randseitig mit einem Elastomersteg 10 für eine aufklappbare Montage verbunden.

Anstelle des oberen Gehäuseteils 4 mit den angehafteten bzw. anvulkanisierten Elastomerelementen 8a und 8b nach Figur 1 ist in der Ausführungsform nach Figur 2 lediglich ein (nicht explizit dargestellter) Spannwinkel ohne Elastomerelemente zur Komplettierung des Spanngehäuses 3 und zur Aufbringung einer Vorspannung erforderlich.

In einer Weiterbildung der Ausführungsform nach Figur 2 kann das Zwischenblech in einem axialen Randbereich in Richtung auf wenigstens eines der Elastomerelemente hin und dieses abstützend umgebördelt werden, wie dies strichliert mit dem Steg bzw. Stützsteg 12 am Elastomerelement 8a schematisch eingezeichnet ist.

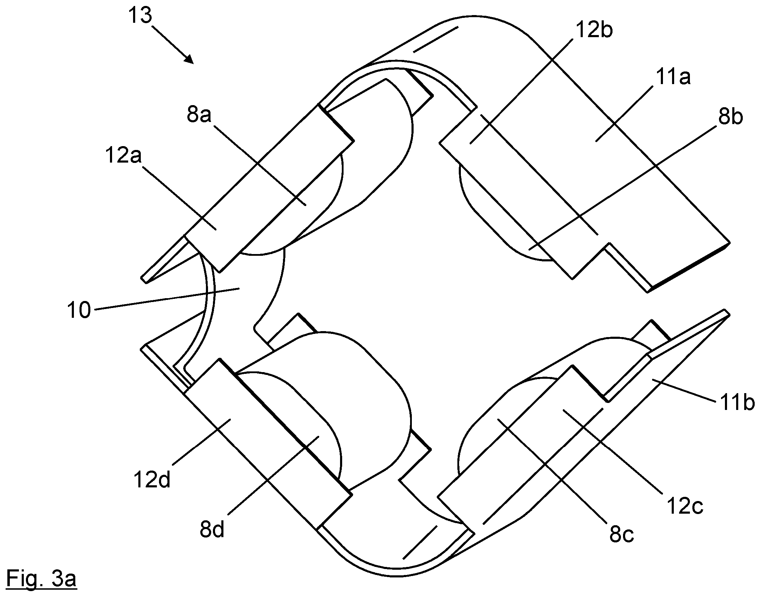

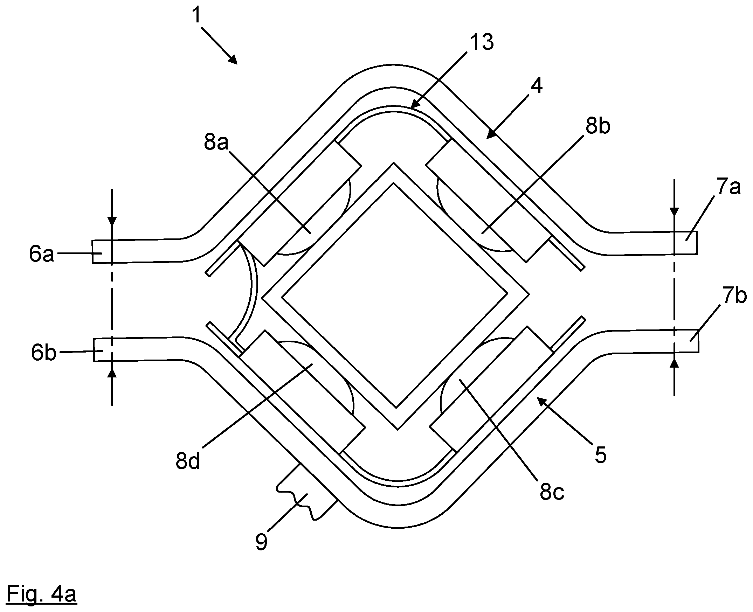

In der modifizierten zweiten Ausführungsform nach den Figuren 3a und 4a sind im Gegensatz zu Figur 2 zwei Zwischenbleche 11a, 11b mit Stegen bzw. Stützstegen 12 verwendet.

In Figur 3a ist ein Vulkanisierteil 13 dargestellt, das zwei gegeneinander gerichtete, abgewinkelte Zwischenbleche 11a und 11b aufweist, die an die Form der Gehäuseteil-Innenfläche angepasst sind und dazu bestimmt sind, in die Gehäuseteile 4 und 5 eingelegt zu werden. Die Elastomerelemente 8a, 8b, 8c, 8d sind hier nicht unmittelbar an den Gehäuseteilen 4, 5 angehaftet, sondern an entsprechenden Positionen an den Innenseiten der Zwischenbleche 11a, 11b angehaftet. Die Elastomerelemente 8a und 8d sind auch hier für eine Klappfunktion randseitig mit einem Elastomersteg 10 verbunden. Die Zwischenbleche 11a und 11b sind hier jeweils randseitig mit Stegen 12a, 12b, 12c, 12d beidseitig auf die zugeordneten Elastomerelemente 8a, 8b, 8c, 8d hin und diese axial stützend umgebördelt.

In Figur 4a ist das Scheibenarmlager 1 in einer stirnförmigen Draufsicht mit bereits eingelegtem Vulkanisierteil 13 dargestellt, das von einem oberen Gehäuseteil 4 und einem unteren Gehäuseteil 5 (beide Gehäuseteile ohne angehaftete Elastomerelemente) umfasst ist und unter Aufbringung einer Vorspannung in den Elastomerelementen 8a, 8b, 8c, 8d eingespannt wird.

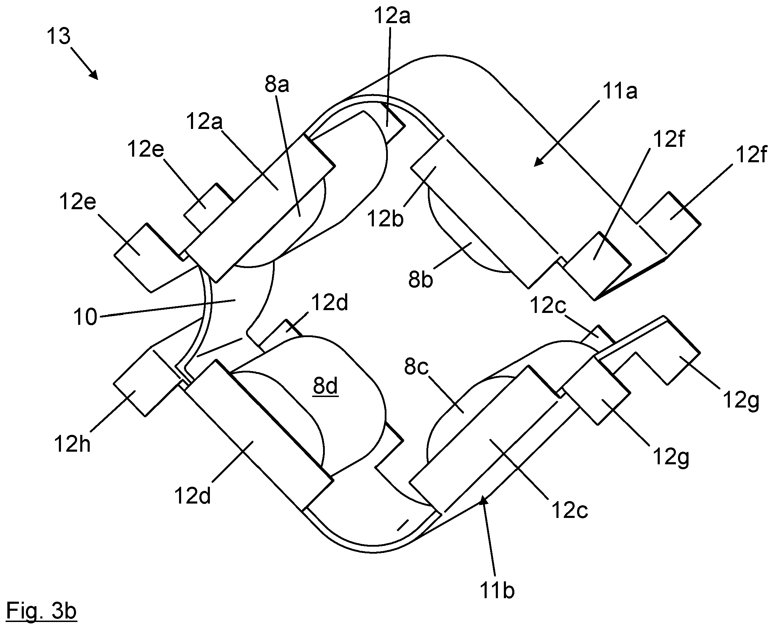

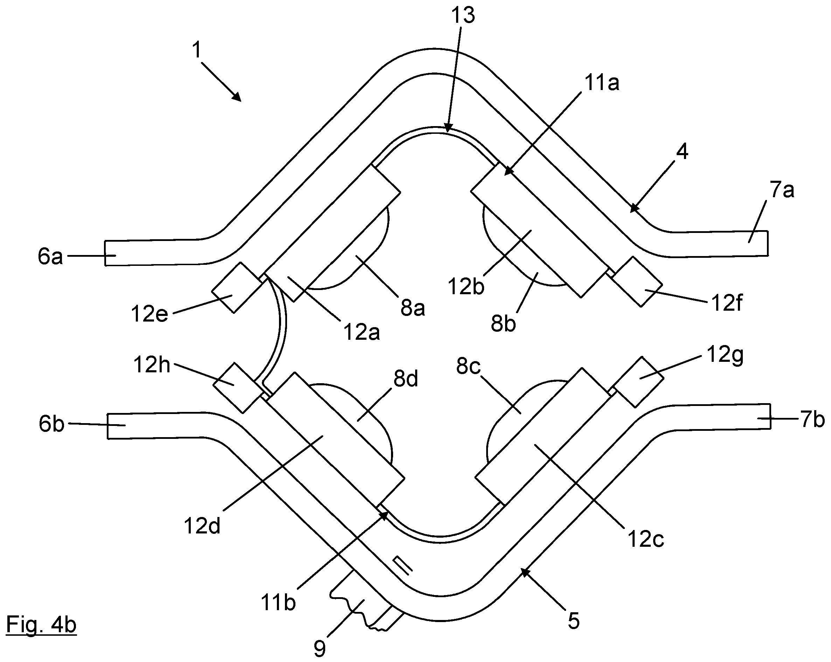

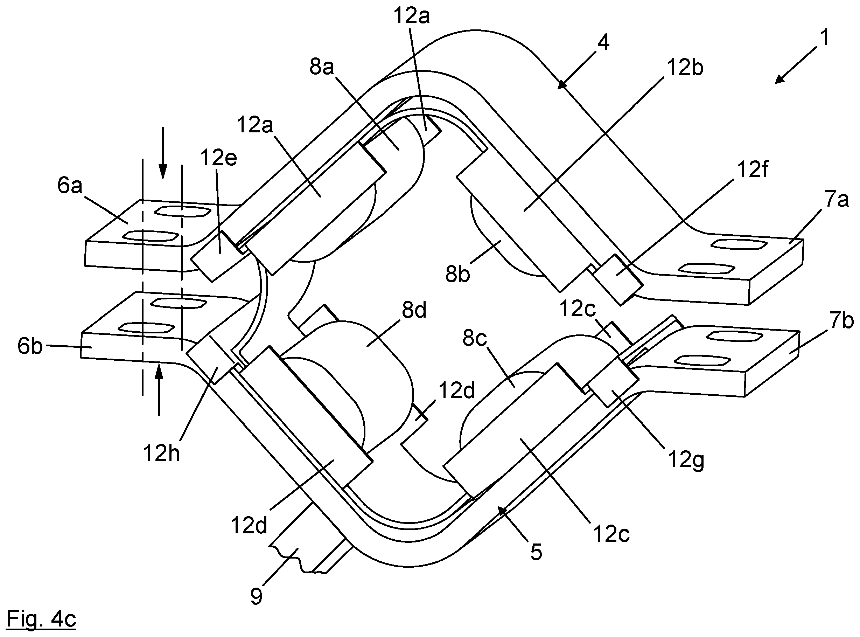

In den Figuren 3b, 4b und 4c ist eine vom Grundprinzip der Ausführungsform der Figuren 3a und 4a entsprechende, leicht abgewandelte Ausführungsform gezeigt, bei der die Zwischenbleche 11a, 11b zusätzlich jeweils randseitig mit weiteren Stegen 12e, 12f, 12g und 12h beidseitig in Richtung auf die Gehäuseteile 4, 5 hin und diese axial stützend umgebördelt sind. Die Figuren 3b und 4b entsprechen hierbei im Wesentlichen den Darstellungen der Figuren 3a und 4a, während die Figur 4c eine mehr perspektivische Darstellung des Elastomerlagers dieser Ausführungsvariante zeigt.

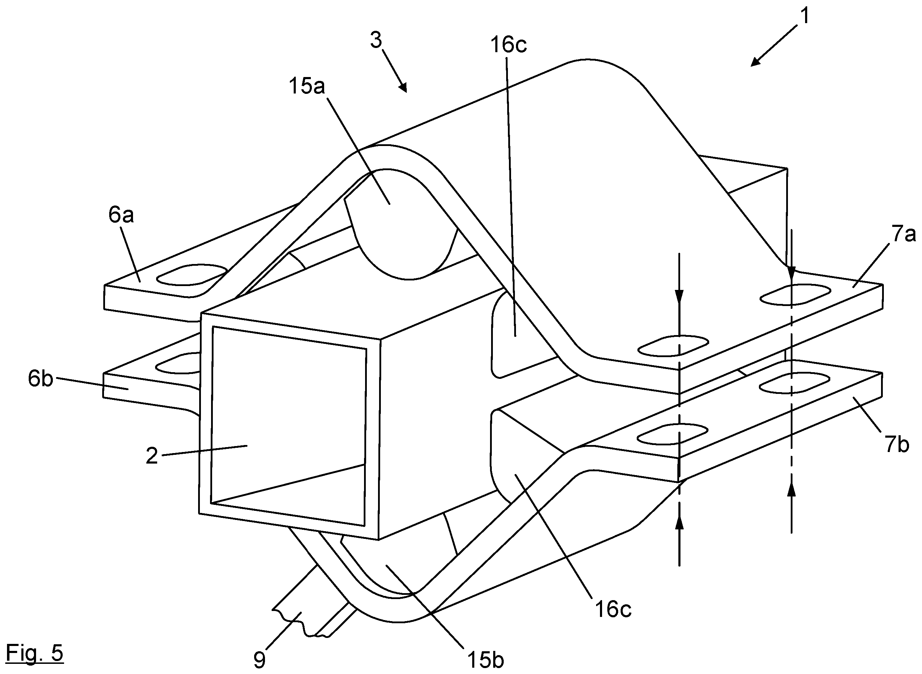

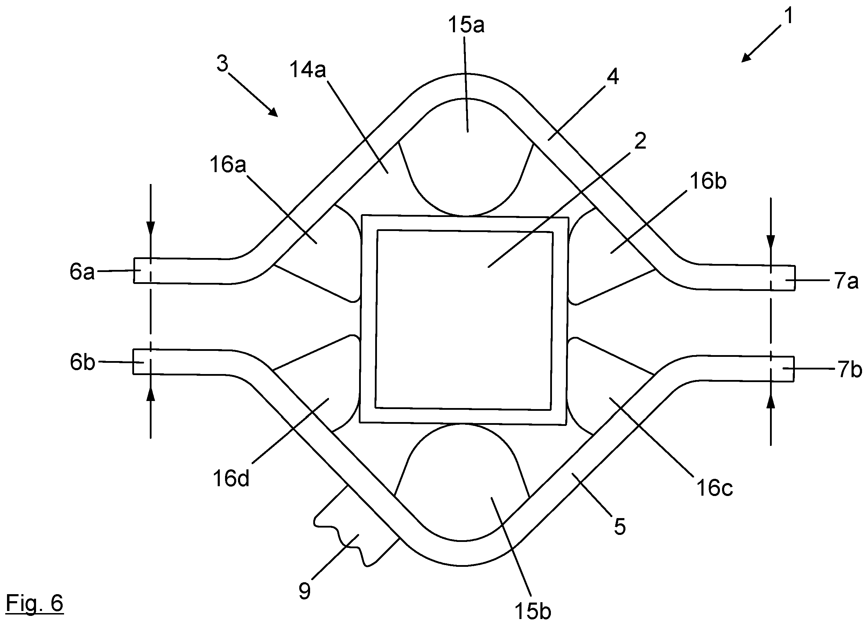

In den Figuren 5 und 6 ist eine dritte Ausführungsform des Scheibenlagers 1 dargestellt und wie aus der perspektivischen Ansicht nach Figur 5 und der Draufsicht aus Figur 6 ersichtlich, liegt hier das Vierkantrohr 2 im Vergleich zu den vorstehenden Ausführungsformen um in etwa 90° verdreht im Spanngehäuse 3.

Das Spanngehäuse 3 weist auch hier beispielhaft ein oberes Gehäuseteil 4 als Winkelteil und ein spiegelbildliches unteres Gehäuseteil 5 als beispielhaftes Winkelteil auf.

Aufgrund der um in etwa 90° gedrehten Lage des Vierkantrohrs 2 sind zwei Dreieckräume 14a, 14b jeweils zwischen dem Vierkantrohr 2 und den zugeordneten Gehäuseteilen 4 und 5 ausgebildet. In diesen Dreieckräumen 14a und 14b sind an den Gehäuseteile 4 und 5 jeweils Elastomerelemente 15a und 15b angehaftet, insbesondere anvulkanisiert.

Im Bereich der Spannflansche 6a, 7a und 6b, 7b ist an den Innenseiten der Gehäuseteile 4 und 5 jeweils ein auf eine gegenüberliegende Vierkantrohr-Außenfläche hin gerichtetes Elastomerelement 16a, 16b, 16c, 16d angehaftet, insbesondere anvulkanisiert.

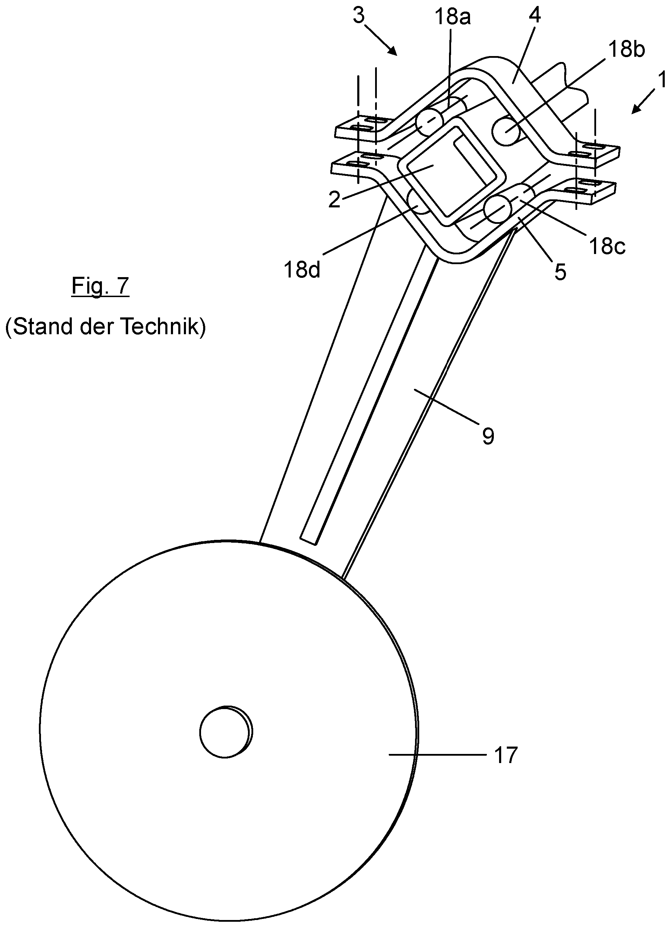

In Figur 7 ist ein Scheibenarmlager 1 nach dem Stand der Technik mit elastisch gelagertem Scheibenarm 9 und daran endseitig drehbar gelagerter Scheibe 17 schematisch dargestellt. Das Scheibenarmlager 1 nach dem Stand der Technik weist auch hier ein Vierkantrohr 2 als Eggen-Querträger bzw. Träger an einem Tragrahmen auf, an dem der Scheibenarm 9 mit dem Scheibenarmlager 1 angeschlossen ist. Auch hier wird das Vierkantrohr 2 mit einem Spanngehäuse 3 mit zwei Gehäuseteile 4, 5 umgriffen, dergestalt, dass Freiräume zwischen den Vierkantrohr 2 und der Spanngehäuseinnenseite ausgebildet sind. In diesen Freiräumen sind nach dem Stand der Technik lediglich zylindrische Elastomerelemente 18a, 18b, 18c, 18d lose eingelegt und eingespannt.

### Bezugszeichenliste

- 1: Scheibenarmlager
- 2: Träger/Vierkantrohr
- 3: Spanngehäuse
- 4: Gehäuseteil
- 5: Gehäuseteil
- 6a, 6b: Spannflansche
- 7a, 7b: Spannflansche
- 8a bis 8d: Elastomerelemente
- 9: Scheibenarm
- 10: Elastomersteg
- 11a, 11b: Zwischenbleche
- 12: Steg
- 12a bis 12d: Stege
- 12e bis 12h: Stege
- 13: Vulkanisierteil
- 14a, 14b: Dreieckräume
- 15a, 15b: Elastomerelemente
- 16a bis 16d: Elastomerelement
- 17: Scheibe
- 18a bis 18d: Elastomerelement

## Patentansprüche

1. Elastomerlager (1), insbesondere für landwirtschaftliche Geräte zur Bodenbearbeitung,
mit einem Träger (2), vorzugsweise einem Träger (2), der geeignet und/oder ausgebildet ist, Bestandteil eines landwirtschaftlichen Gerätes zur Bodenbearbeitung zu bilden und/oder dort angeordnet zu werden,
mit einem mehrteiligen, vorzugsweise metallischen, Spanngehäuse (3), das mehrere, vorzugsweise zwei, miteinander verbindbare Gehäuseteile (4, 5) aufweist,
wobei an einem der Gehäuseteile (5) ein Funktionsarm (9) anordenbar ist, vorzugsweise ein ein Bodenbearbeitungswerkzeug aufweisender und/oder ausbildender Funktionsarm (9) anordenbar ist,
wobei die Gehäuseteile (4, 5) geeignet und/oder ausgebildet sind, den Träger (2) unter Zwischenschaltung wenigstens eines Elastomerelementes (8a bis 8d; 15a, 15b; 16a bis 16d) zwischen dem Träger (2) und den Gehäuseteilen (4, 5) zu umgreifen und den Funktionsarm (9) im endmontierten, verbundenen Zustand der Gehäuseteile (4, 5) elastisch vorgespannt am Träger (2) zu lagern,
**dadurch gekennzeichnet,**
**dass** das wenigstens eine Elastomerelement (8a bis 8d; 15a, 15b; 16a bis 16 d) mit den Gehäuseteilen (4, 5) unlösbar oder lösbar verbunden ist.

2. Elastomerlager (1) nach Anspruch 1, **dadurch gekennzeichnet, dass** das wenigstens eine Elastomerelement (8a bis 8d; 15a, 15b; 16a bis 16d) zur lösbaren Verbindung mit den Gehäuseteilen (4, 5) mittels einer Formschlussverbindung lösbar an einer inneren Fläche der Gehäuseteile (4, 5) angebunden ist, vorzugsweise mittels wenigstens eines Einknüpfelementes des wenigstens einen Elastomerelementes (8a bis 8d; 15a, 15b; 16a bis 16d) an wenigstens einem Einknüpfgegenelement einer inneren Fläche der Gehäuseteile (4, 5) lösbar und formschlüssig eingeknüpft ist.

3. Elastomerlager (1) nach Anspruch 1 oder 2, **dadurch gekennzeichnet, dass** das wenigstens eine Elastomerelement (8a bis 8d; 15a, 15b; 16a bis 16d) zur unlösbaren Verbindung mit den Gehäuseteilen (4,5) an einer inneren Fläche der Gehäuseteile (4, 5) angehaftet ist, vorzugsweise anvulkanisiert ist.

4. Elastomerlager (1) nach einem der vorhergehenden Ansprüche, **dadurch gekennzeichnet,**
**dass** der Träger (2) ein Vierkantelement, vorzugsweise ein Vierkantrohr, ist, dessen Vierkantelement-Seiten eine vorbestimmte Kantenlänge aufweisen,
**dass** das Spanngehäuse (3) zweigeteilt ist und zwei Gehäuseteile (4, 5) aufweist, die im verbundenen, zusammengespannten Zustand ein Vierkant-Aufnahmeauge ausbilden, dessen Aufnahmeauge-Seiten eine vorbestimmte Kantenlänge aufweisen, vorzugsweise mit einer im Vergleich zu den Vierkantelement-Seiten größeren Kantenlänge.

5. Elastomerlager (1) nach Anspruch 4, **dadurch gekennzeichnet, dass** die Gehäuseteilung des Spanngehäuses (3) an zwei gegenüberliegenden Vierkantecken liegt, wobei an jedem der Gehäuseteile (4, 5) der gegenüberliegenden Vierkantecken Spannflansche (6a, 6b, 7a, 7b) angeordnet und einander zugeordnet sind.

6. Elastomerlager (1) nach Anspruch 4 oder 5, **dadurch gekennzeichnet, dass** zwischen einander zugeordneten Vierkantelement-Außenflächen und Gehäuseteil-Innenflächen wenigstens ein Elastomerelement (8a, 8b, 8c, 8d) angeordnet ist, wobei in den Elastomerelementen (8a, 8b, 8c, 8d) im endmontierten Zustand bei zusammengespanntem Spanngehäuse (3) eine Vorspannung aufgebracht ist.

7. Elastomerlager (1) nach Anspruch 6, **dadurch gekennzeichnet, dass** bei parallel zueinander ausgerichteten und einander zugewandten Vierkantelement-Außenflächen und Gehäuseteil-Innenflächen jeweils wenigstens ein Elastomerelement (8a, 8b, 8c, 8d) zwischen den einander zugewandten parallelen Vierkantelement-Außenflächen und Gehäuseteil-Innenflächen angeordnet ist oder dass bei einer, gegenüber einer parallelen Ausrichtung der Vierkantelement-Außenflächen und Gehäuseteil-Innenflächen, verdrehten Vierkantelementanordnung jeweils mehrere Elastomerelemente (16a, 16b, 16c, 16d) zwischen mehreren Vierkantelement-Außenflächen und der Gehäuseteil-Innenfläche eines Gehäuseteils (4, 5) angeordnet sind.

8. Elastomerlager (1) nach Anspruch 6 oder 7, **dadurch gekennzeichnet, dass** wenigstens zwei, vorzugsweise voneinander beabstandete, Elastomerelemente (8a, 8b, 8c, 8d) direkt an jeder Gehäuseteil-Innenfläche der beiden Gehäuseteile (4, 5) lösbar oder unlösbar angebunden sind.

9. Elastomerlager (1) nach Anspruch 8, **dadurch gekennzeichnet, dass** eines der einander an den beiden Gehäuseteilen (4, 5) randseitig benachbart gegenüberliegenden Paar von Elastomerelementen (8a, 8d) mittels eines Elastomersteges (10) verbunden ist, vorzugsweise dergestalt, dass die beiden Gehäuseteile (4, 5) zusammenhängend zur Montage am Träger (2) aufklappbar sind.

10. Elastomerlager (1) nach Anspruch 6 oder 7, **dadurch gekennzeichnet,**
**dass** in wenigstens einem der beiden Gehäuseteile (4, 5) ein Zwischenblech (11a, 11b), das Bestandteil des Spanngehäuses (3) bildet, angeordnet ist, vorzugsweise eingelegt ist,
**dass** das Zwischenblech (11a, 11b) im endmontierten Zustand an der zugeordneten Gehäuseteil-Innenfläche, vorzugsweise form- und/oder konturangepasst, anliegt, und
**dass** die Elastomerelemente (8a, 8b, 8c, 8d) mit dem Zwischenblech (11a, 11b) unlösbar oder lösbar verbunden sind, vorzugsweise mit einer dem Vierkantelement (2) zugewandten Zwischenblech-Innenfläche unlösbar oder lösbar verbunden sind.

11. Elastomerlager (1) nach Anspruch 10, **dadurch gekennzeichnet, dass** eines der einander randseitig benachbart gegenüberliegenden Paare von Elastomerelementen (8a, 8d) mittels eines Elastomersteges (10) miteinander verbunden ist.

12. Elastomerlager (1) nach Anspruch 10 oder 11, **dadurch gekennzeichnet, dass** das wenigstens eine Zwischenblech (11a, 11b) zumindest bereichsweise mit einem axialen Randbereich (12) in Richtung auf die Elastomerelemente (8a, 8b, 8c, 8d) zu und diese axial abstützend zu wenigstens einem Steg (12a, 12b, 12c, 12d) umgebogen ist, vorzugsweise umgebördelt ist.

13. Elastomerlager (1) nach einem der Ansprüche 10 bis 12, **dadurch gekennzeichnet, dass** das wenigstens eine Zwischenblech (11a, 11b) zumindest bereichsweise mit einem axialen Randbereich (12) in Richtung auf die Gehäuseteile (4, 5) zu und diese axial abstützend zu wenigstens einem Steg (12e, 12f, 12g, 12h) umgebogen ist, vorzugsweise umgebördelt ist.

14. Elastomerlager (1) nach einem der Ansprüche 6 bis 13, **dadurch gekennzeichnet, dass** die Vierkantelement-Außenflächen und die Gehäuseteil-Innenflächen, bezogen auf deren parallele Ausrichtung, so verdreht, vorzugsweise um 90° verdreht, sind und/oder liegen, dass im montierten Zustand das zweiteilige Spanngehäuse (3) und das Vierkantelement (2) jeweils zwei gegenüberliegende Dreieckräume (14a, 14b) ausbilden, in denen an den Gehäuseteilen (4, 5) Elastomerelemente (15a, 15b) lösbar oder unlösbar angebunden sind, die die Dreieckräume (14a, 14b) im endmontierten Zustand wenigstens teilweise ausfüllen, wobei bevorzugt vorgesehen ist, dass im Bereich der Spannflansche (6a, 6b, 7a, 7b) an den Innenseiten der Gehäuseteile (4, 5) jeweils ein in Richtung auf eine gegenüberliegende Vierkantelement-Außenfläche hin gerichtetes Elastomerelement (16a, 16b 16c, 16d) lösbar oder unlösbar angebunden ist.

15. Landwirtschaftliches Gerät, vorzugsweise Egge, zur Bodenbearbeitung,
mit einem Träger (2), an dem wenigstens ein Funktionsarm (9), vorzugsweise wenigstens ein ein Bodenbearbeitungswerkzeug aufweisender und/oder ausbildender Funktionsarm (9), mittels eines Elastomerlagers (1), vorzugsweise mittels eines Elastomerlagers (1) nach einem der vorhergehenden Ansprüche, gelagert ist, wobei bevorzugt vorgesehen ist, dass eine Mehrzahl von in Querrichtung beabstandeten und/oder versetzten Funktionsarmen (9) mittels jeweils eines Elastomerlagers (1) gelagert sind,
wobei das wenigstens eine Elastomerlager (1) ein mehrteiliges, vorzugsweise metallisches, Spanngehäuse (3) aufweist, das mehrere, vorzugsweise zwei, miteinander verbindbare Gehäuseteile (4, 5) aufweist,
wobei der Funktionsarm (9) an einem der Gehäuseteile (5) befestigt ist, und
wobei die Gehäuseteile (4, 5) geeignet und/oder ausgebildet sind, den Träger (2) im endmontierten Zustand zu umgreifen, wobei zwischen dem Träger (2) und den umgreifenden Gehäuseteilen (4, 5) wenigstens ein Elastomerelement (8a bis 8d; 15a, 15b; 16a bis 16d) angeordnet ist, das im endmontierten Zustand bei miteinander verbundenen Gehäuseteilen (4, 5) elastisch vorgespannt ist,
**dadurch gekennzeichnet,**
**dass** das wenigstens eine Elastomerelement (8a bis 8d; 15a, 15b; 16a bis 16d) mit den Gehäuseteilen (4, 5) lösbar oder unlösbar verbunden ist.

16. Landwirtschaftliches Bodenbearbeitungsgerät nach Anspruch 15, **dadurch gekennzeichnet, dass** das Elastomerlager (1) ein Scheibenarmlager (1) einer Scheibenegge ist, bei der an wenigstens zwei hintereinander liegenden Trägern (2) eines Tragrahmens, der geeignet und/oder ausgebildet ist, mittels einer Zugmaschine über eine Bearbeitungsfläche gezogen zu werden, in Querreihen drehbar gelagerte Scheiben (7) endseitig an Scheibenarmen (9) angeordnet sind.
